# EUROPEAN PATENT SPECIFICATION

(11) **EP 1 427 623 B1**
(45) Date of publication and mention of the grant of the patent: **17.02.2010**
(21) Application number: 02765737.8
(22) Date of filing: 03.09.2002
(51) Int. Cl.: B60T 13/66, B60T 17/18, G05B 11/14

(54) **ARRANGEMENT FOR AN AUXILIARY BRAKE IN A MOTOR VEHICLE**
ANORDNUNG FÜR EINE HILFSBREMSE IN EINEM KRAFTFAHRZEUG
ARRANGEMENT DE FREIN AUXILIAIRE DANS UN VEHICULE A MOTEUR

(30) Priority: 05.09.2001 SE 0102942
(43) Date of publication of application: 16.06.2004
(73) Proprietor: Scania CV AB (publ), 151 87 Södertälje (SE)
(72) Inventor: SÖDERMAN, Göran, S-151 46 Södertälje (SE)
(86) International application number: PCT/SE2002/001570
(87) International publication number: WO 2003/020562

(56) References cited:
- WO-A1-01/45992
- DE-A1- 4 024 078
- DE-C1- 4 102 497

## Description

### BACKGROUND TO THE INVENTION, AND STATE OF THE ART

The present invention relates to an arrangement pertaining to a supplementary brake in a motor vehicle according to the preamble of claim 1.

Supplementary brake means an extra brake which provides the vehicle's powered wheels with a braking action via a motion-transmitting mechanism which incorporates at least one portion of a driveline of the vehicle. Supplementary brakes are used primarily on heavy motor vehicles to provide braking of the vehicle, particularly on lengthy downhill runs, in order to prevent unduly severe loading of the vehicle's ordinary wheel brakes. Supplementary brakes are also usually activated mainly for slight deceleration before the ordinary wheel brakes are applied, in order to reduce the wear on the ordinary brakes. Such supplementary brakes comprise, for example, hydraulic or electric retarders, exhaust brakes or compression brakes.

Braking action here has a general connotation covering, for example, braking torque, braking force or the like. WO 01 45992 A1 describes a state of the art control device.

When braking of the vehicle is intended, a driver moves a control means, which is usually a brake pedal or a lever, to a position which corresponds to a desired braking action of the vehicle. However, the braking action obtained from a supplementary brake does not always correspond exactly to the braking action initiated via the control means. Such deviation may be due to wear of components of the supplementary brake or to a not entirely negligible composite margin of error arising from the relatively long transmission sequences of various components of supplementary brakes.

### SUMMARY OF THE INVENTION

The object of the present invention is to provide an arrangement for monitoring whether an actual braking action from a supplementary brake of a vehicle corresponds to a desired such braking action. Another object is, as far as possible, to adjust such deviations so that an actual braking action obtained from the supplementary brake corresponds very exactly to the desired braking action.

The first object indicated above is achieved with the arrangement mentioned in the introduction which is characterised by what is indicated in the characterising part of claim 1. In that case a monitoring unit receives not only information concerning a desired braking action which is initiated by a position of the control means but also information from a sensor concerning at least one measured parameter value which is related to the braking action supplied by the supplementary brake. The supplementary brake is a hydrodynamic brake. On the basis of knowing said parameter value, the monitoring unit calculates or estimates the actual braking torque supplied. Thereafter the monitoring unit calculates the difference between the braking action desired and the braking action supplied. This difference constitutes the value which allows monitoring of how closely the actual braking action from a supplementary brake matches the desired braking action.

According to a preferred embodiment of the present invention, the monitoring unit is incorporated in a control unit which is designed to control said brake-applying means so that any difference between a desired braking action and a braking action supplied is adjusted. As the monitoring unit calculates or estimates the difference between the respective brake actions supplied and desired, the control unit can use this information for controlling the brake-applying means so that this difference is substantially entirely eliminated. The braking action supplied can thus be adapted so as to match very exactly the desired braking action. Alternatively, the control unit may be designed to control said brake-applying means so that the braking action supplied is corrected on the basis of knowledge of stored values of previous measured differences between a supplied and a desired braking action. In this case, when a corresponding desired braking action is initiated, the control unit can directly use knowledge of previous differences to control said brake-applying means so that an actual braking action is supplied which matches with good precision the desired braking action.

A hydrodynamic brake is with advantage a so-called hydraulic retarder, which is the supplementary brake most commonly used on heavy vehicles. The sensor is with advantage a pressure sensor designed to measure the pressure of a medium which flows through the hydrodynamic brake. The pressure of the medium in a hydrodynamic brake bears a substantially direct relationship to the braking torque which the hydrodynamic brake supplies. With modern pressure sensors the pressure can be measured with very good precision. This means that the monitoring unit can quickly and relatively easily calculate with good precision on the basis of pressure values received the braking torque supplied by the supplementary brake. The sensor is preferably situated in a space which is adjacent to an inlet or outlet for the medium to a toroidal space defined by a rotor and a stator of the hydrodynamic brake. The pressure of the medium can thus be measured in the substantially immediate vicinity of the toroidal space and very relevant pressure values can be obtained. In the case of conventional hydraulic retarders, said brake-applying means incorporates a proportional valve designed to move a regulating piston in order to control the supply of said medium to the hydrodynamic brake. The control unit can thus control the proportional valve in such a way as to obtain a braking action which substantially fully matches a braking action called for.

According to another preferred embodiment of the present invention, the arrangement incorporates an indicating device designed to be activated when the estimated difference between the braking action supplied and the desired braking action exceeds a specific value. A braking action which is unexpectedly high or low relative to the desired braking action may be due to defectiveness of some component of the supplementary brake. In cases where the supplementary brake is a hydraulic retarder, the oil level may be faulty and need correcting. Such an indicating device gives the driver warning that the supplementary brake is probably not wholly intact and needs repairing. The indicating device may be an indicating lamp on the vehicle's instrument panel which lights up when a difference exceeding the specific value occurs.

According to another preferred embodiment of the present invention, the sensor is a torque sensor designed to measure the torque which acts upon at least one component of the motion-transmitting mechanism. An alternative parameter for estimating the braking action supplied is thus provided by measuring the torque which acts upon, preferably, a shaft of the motion-transmitting mechanism. The value of this torque is also substantially directly proportional to the brake torque supplied. The monitoring unit can quickly and easily calculate the braking torque supplied on the basis of information about the torque in said component at the time. An example of said component is an output shaft from a gearbox of the vehicle. Relevant torque values can be obtained at least for retarders which are situated in the vicinity of the gearbox output shaft.

### BRIEF DESCRIPTION OF THE DRAWINGS

Preferred embodiments of the invention are described below as examples with reference to the attached drawings, in which:
- Fig. 1: depicts schematically an arrangement according to a first embodiment of the present invention,
- Fig. 2: depicts a hydraulic retarder to which the present invention is applicable and
- Fig. 3: depicts schematically an arrangement according to a second embodiment of the present invention.

### DETAILED DESCRIPTION OF PREFERRED EMBODIMENTS OF THE PRESENT INVENTION.

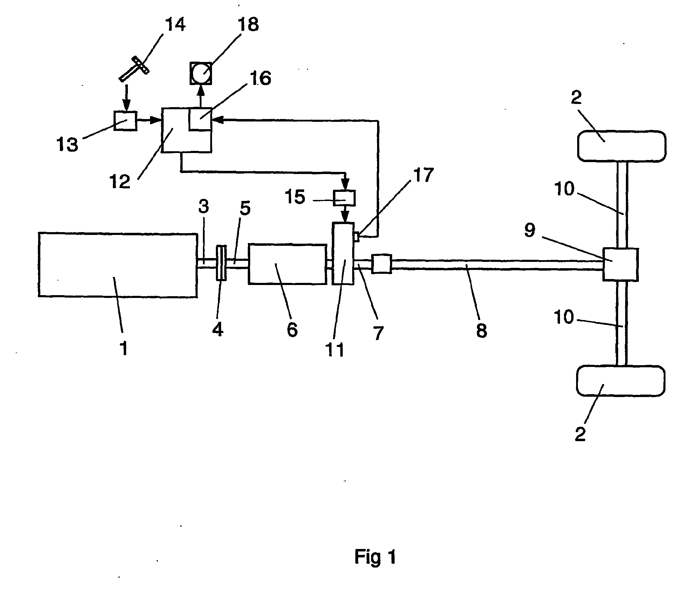

Fig. 1 schematically depicts selected parts of a motor vehicle with an arrangement according to the present invention. The motor vehicle is powered by an engine 1 which may be, for example, a diesel engine. The drive motions of the engine 1 are transmitted via a driveline to the vehicle's powered wheels 2. The driveline comprises a shaft 3 which extends from the engine 1, a clutch 4, an input shaft 5 to a gearbox 6, an output shaft 7 from the gearbox 6, a universal shaft 8, a final gear 9 and driveshafts 10 which are connected to the vehicle's powered wheels 2. A hydrodynamic brake in the form of a hydraulic retarder 11 is so arranged as to be able to supply a braking action to the powered wheels 2 via a motion-transmitting mechanism which incorporates the portion of the vehicle's driveline which extends from the gearbox output shaft 7 rearwards. A control unit 12 is designed to receive information from a measuring unit 13 concerning the position of a brake pedal 14. The control unit 12 is designed to control a proportional valve 15 in order to regulate a hydraulic oil flow through the retarder 11 according to the position of the brake pedal 14 so that a desired braking action is obtained. The desired braking action is hereinafter defined as a braking torque.

The braking torque obtained from a supplementary brake, which is thus here a hydraulic retarder 7, may in certain cases exhibit deviations from the desired braking torque initiated by the position of the brake pedal 14. Such deviations may be due to wear of components of the retarder 11 or to a not entirely negligible composite margin of error arising from the relatively long transmission sequences of various components of the supplementary brakes. In order to obtain a substantially entirely exact match between a supplied and a desired braking torque, an arrangement which incorporates a monitoring unit 16 is arranged. The monitoring unit 16 which is here incorporated in the control unit 12 is designed to receive information about the braking torque desired by the driver.
Such information is obtained from, for example, the control unit 12 or from a signal from the measuring unit 13 concerning the position of the brake pedal 14. The arrangement also incorporates a pressure sensor 17 designed to measure the pressure of the hydraulic oil which during a braking process flows through the retarder 11. The pressure of the hydraulic oil is a parameter which is substantially directly related to the braking torque supplied by the retarder 11. The monitoring unit 16 can relatively easily use knowledge of the hydraulic oil pressure at the time to calculate with good precision the braking torque supplied. Thereafter the monitoring unit 16 calculates the difference between the braking torque supplied and the desired braking torque. The control unit 12 and the monitoring unit 16 are with advantage computer units with software which is adapted to performing the functions described above. The arrangement also incorporates an indicating means, which may be an indicating lamp 18 on the vehicle's instrument panel. The indicating lamp 18 lights up if an abnormally large difference occurs between the braking torque supplied and that desired. The indicating lamp 18 lights up if the difference exceeds a specific value. The specific value is large enough to ensure that any such difference occurring is presumably caused by a defect of some component of the retarder 11. Alternatively, the hydraulic oil level in the retarder 11 may be defective.

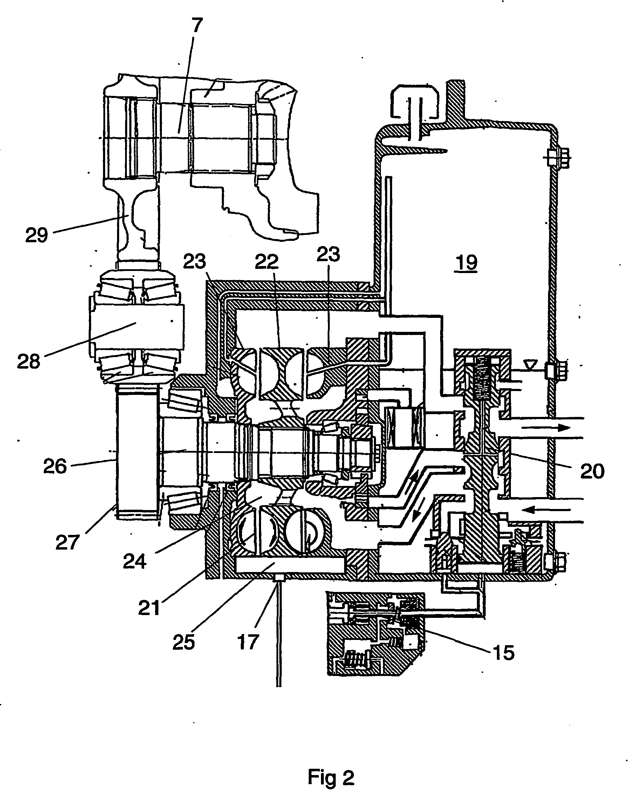

Fig. 2 depicts the hydraulic retarder 11 in more detail. The retarder 11 incorporates an oil sump 19 which contains hydraulic oil. A movable regulating piston 20 is arranged in the oil sump 19. A proportional valve 15 is designed to be activated by the control unit 12 in order to move the regulating piston 20 with the object of regulating the flow of hydraulic oil to and from, in this case, two toroidal spaces 21 of the retarder 11. The toroidal spaces 21 are here defined by a double rotor 22 and two stators 23. The hydraulic oil is led to the respective toroidal spaces 21 via an inner radial space 24 and from the toroidal spaces 21 via an outer radial space 25. The double rotor 22 is arranged firmly on, and rotates with, a retarder shaft 26. The retarder shaft 26 is connected to the vehicle's driveline via a gearwheel 27 arranged on the retarder shaft 26, an intermediate gear wheel 28, and a gear wheel 29 which is arranged on the gearbox output shaft 7. The pressure sensor 17 is here arranged so that the hydraulic oil pressure is measured in the space 24. In this case the hydraulic oil pressure is measured substantially immediately after the hydraulic oil has flowed out from the toroidal space 21. The hydraulic oil pressure in the space 24 measured by the pressure sensor 17 thus bears a substantially direct relationship to the braking torque which the hydrodynamic brake supplies.

During operation of the vehicle, a driver initiates a desired braking action by depressing the brake pedal 14 to a corresponding extent. The extent of depression is registered by a measuring unit 13 which sends a signal to the control unit 12 which registers the desired braking torque. Thereafter the control unit 12 controls the proportional valve 15 so that the regulating valve 20 allows a volume of hydraulic oil to be supplied via the toroidal spaces 21 such that the retarder 11 will provide the desired braking action. The pressure sensor 17 detects substantially simultaneously the hydraulic oil pressure in the space 24 and sends a measurement signal to the monitoring unit 16. The monitoring unit 16 uses knowledge of the hydraulic oil pressure to calculate the actual braking torque which is supplied to the driveline and the powered wheels 2. The monitoring unit 16 then calculates whether there is a difference between the braking torque supplied and that desired. If there is such a difference, the control unit 12 is activated and controls the proportional valve 15 so that the difference between the desired braking torque and the braking torque supplied is substantially entirely eliminated.

Alternatively, information concerning differences occurring between the brake action supplied and that desired is successively stored in the control unit 12. In such cases the control unit 12 may control the proportional valve 15 so that any correction is applied immediately on the basis of knowledge of the latest stored values concerning measured differences between a desired braking torque and a braking torque supplied.

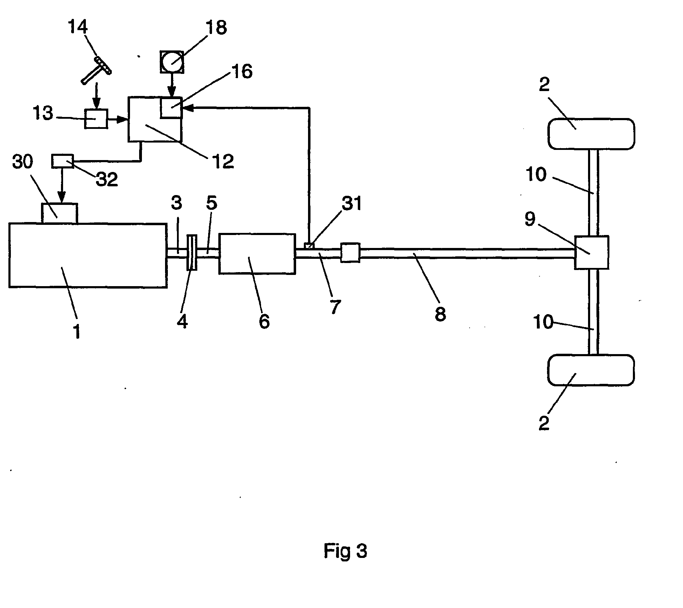

Fig. 3 depicts schematically a motor vehicle with an alternative arrangement according to the present invention. In this case a supplementary brake in the form of an exhaust brake 30 is used for supplying a braking torque to powered wheels 2 of the motor vehicle. Substantially the whole driveline
3-10 of the vehicle is used for transmitting said braking torque from the exhaust brake 30 to the powered wheels 2. In this case a torque sensor 31 is arranged on the output shaft 7 of the gearbox. The torque value detected by the torque sensor 31 is also substantially directly proportional to the braking torque supplied.

The monitoring unit 16 can quickly and easily use knowledge of the torque value at the time to calculate the braking torque supplied. Thereupon, the control unit 12 controls, in the manner described above, a brake-applying means 32 so that any difference between a supplied and a desired braking torque is substantially entirely eliminated. The result is a very good match between a supplied and a desired braking torque.

The present invention is in no way limited to the embodiments described above in the drawings but may be modified freely within the scopes of the claims. For example, torque sensors may also be used in conjunction with other supplementary brakes such as hydraulic retarders. Pressure sensors may be applied at substantially any point on the hydraulic retarder where pressure values relevant to the context can be obtained. In a corresponding manner, the torque sensor may be arranged at substantially any point along the extent of the brake-transmitting mechanism between supplementary brakes and powered wheels. Types of sensor which are other than those mentioned above and which detect other parameters related to the braking action applied may also be used.

## Claims

1. An arrangement pertaining to a hydrodynamic supplementary brake in a motor vehicle, which vehicle incorporates a control means (14) with which a desired braking action is intended to be initiated by a driver, and brake-applying means (15, 32) for activating the supplementary brake (11, 30) so that the latter supplies a braking action to at least one of the vehicle's powered wheels (2) via a motion-transmitting mechanism which comprises at least one portion of a driveline (3-10) of the vehicle, **characterised in that** the supplementary brake (11) is a hydrodynamic brake and that the arrangement incorporates a monitoring unit (16) designed to receive information concerning the desired braking action, and a sensor (17, 31) designed to measure the pressure of a medium which flows through the hydrodynamic brake (11), which pressure has a value which bears a relationship to the braking action supplied by the supplementary brake (11, 30), and the monitoring unit (16) is designed to determine the braking action supplied and the difference between the braking action supplied and the desired braking action.

2. An arrangement according to claim 1, **characterised in that** the monitoring unit (16) is incorporated in a control unit (12) which is designed to control said brake-applying means (15, 32) so that any difference between a desired braking action and a braking action supplied is substantially eliminated.

3. An arrangement according to claim 2, **characterised in that** the control unit (12) is designed to control said brake-applying means (15, 32) so that the braking action supplied is corrected on the basis of knowledge of stored values concerning previously measured differences between a braking action supplied and a desired braking action.

4. An arrangement according to any one of the foregoing claims, **characterised in that** a pressure sensor (17) is situated in a space (24, 25) which is adjacent to an inlet or outlet for the medium to a toroidal space (21) which is defined by a rotor (22) and a stator (23) of the hydrodynamic brake (11).

5. An arrangement according to any one of the foregoing claims, **characterised in that** said brake-applying means incorporates a proportional valve (15) which is designed to move a regulating piston (20) in order to control the flow of said medium to and from the hydrodynamic brake (11).

6. An arrangement according to any one of the foregoing claims, **characterised in that** the arrangement incorporates an indicating device (18) which is designed to be activated when the estimated difference between the braking action supplied and the desired braking action exceeds a specific value.

## Patentansprüche

1. Anordnung für eine hydrodynamische Zusatzbremse in einem Kraftfahrzeug, wobei das Fahrzeug ein Steuermittel (14), mit dem eine durch einen Fahrer ausgelöste, gewünschte Bremswirkung eingeleitet wird, und Bremswirkungsentfaltungsmittel (15, 32) zum Aktivieren der Zusatzbremse (11, 30) aufweist, so dass letztere eine Bremswirkung an wenigstens einem der angetriebenen Fahrzeugräder (2) durch einen Bewegungs-Übertragungsmechanismus bereitstellt, der zumindest einen Teil eines Antriebsstrangs (3-10) des Fahrzeugs aufweist,
**dadurch gekennzeichnet, dass** die Zusatzbremse (11) eine hydrodynamische Bremse ist,
und dass die Anordnung eine Überwachungseinheit (16), die dazu vorgesehen ist, Informationen bezüglich der gewünschten Bremswirkung zu empfangen, und einen Sensor (17, 31) aufweist, der dazu vorgesehen ist, den Druck eines Mediums zu erfassen, das durch die hydrodynamische Bremse (11) strömt, wobei der Druck einen Wert aufweist, der im Verhältnis zu der durch die Zusatzbremse (11, 30) bereitgestellten Bremswirkung steht, und wobei die Überwachungseinheit (16), dazu vorgesehen ist, die bereitgestellte Bremswirkung und die Abweichung zwischen der bereitgestellten Bremswirkung und der gewünschten Bremswirkung zu ermitteln.

2. Anordnung nach Anspruch 1,
**dadurch gekennzeichnet, dass** die Überwachungseinheit (16) in einer Steuereinheit (12) integriert ist, die dazu vorgesehen ist, das Bremswirkungsentfaltungsmittel (15, 32) zu steuern, so dass jede Abweichung zwischen einer gewünschten Bremswirkung und einer bereitgestellten Bremswirkung im Wesentlichen eliminiert wird.

3. Anordnung nach Anspruch 2,
**dadurch gekennzeichnet, dass** die Steuereinheit (12) dazu vorgesehen ist, das Bremswirkungsentfaltungsmittel (15, 32) zu steuern, so dass die bereitgestellte Bremswirkung korrigiert wird, basierend auf der Kenntnis von gespeicherten Werten von zuvor erfassten Abweichungen zwischen einer bereitgestellten Bremswirkung und einer gewünschten Bremswirkung.

4. Anordnung nach einem der vorangehenden Ansprüche,
**dadurch gekennzeichnet, dass** ein Drucksensor (17) in einem Raum (24, 25) angeordnet ist, der benachbart zu einem Einlass oder einem Auslass für das Medium zu einem Torusraum (21) ist, der durch einen Rotor (22) und einen Stator (23) der hydrodynamischen Bremse (11) definiert ist.

5. Anordnung nach einem der vorangehenden Ansprüche,
**dadurch gekennzeichnet, dass** das Bremswirkungsentfaltungsmittel ein Proportionalventil (15) aufweist, das dazu vorgesehen ist, einen Regelkolben (20) zu bewegen, um den Fluss des Mediums zu und von der hydrodynamischen Bremse (11) zu steuern.

6. Anordnung nach einem der vorangehenden Ansprüche,
**dadurch gekennzeichnet, dass** die Anordnung eine Anzeigevorrichtung (18) aufweist, die dazu vorgesehen ist, aktiviert zu werden, wenn die ermittelte Abweichung zwischen der bereitgestellten Bremswirkung und der gewünschten Bremswirkung einen bestimmten Wert überschreitet.

## Revendications

1. Agencement de frein hydrodynamique supplémentaire dans un véhicule à moteur, lequel véhicule comporte un moyen de commande (14) au moyen duquel une action de freinage désirée est destinée à être déclenchée par un conducteur, et un moyen (15, 32) d'application du frein permettant d'activer le frein supplémentaire (11, 30) de façon que ce dernier fournisse une action de freinage à au moins l'une des roues motrices (2) du véhicule via un mécanisme de transmission de mouvement qui comprend au moins une partie d'une transmission (3-10) du véhicule, **caractérisé en ce que** le frein supplémentaire (11) est un frein hydrodynamique et **en ce que** l'agencement comprend une unité de surveillance (16), conçue pour recevoir des informations concernant l'action de freinage désirée, et un capteur (17, 31) conçu pour mesurer la pression d'un milieu s'écoulant à travers le frein hydrodynamique (11), la valeur de ladite pression étant en rapport avec l'action de freinage fournie par le frein supplémentaire (11, 30), et **en ce que** l'unité de surveillance (16) est conçue pour déterminer l'action de freinage fournie et la différence entre l'action de freinage fournie et l'action de freinage désirée.

2. Agencement selon la revendication 1, **caractérisé en ce que** l'unité de surveillance (16) est incorporée dans une unité de commande (12) conçue pour commander ledit moyen (15, 32) d'application du frein de façon telle que toute différence entre une action de freinage désirée et une action de freinage fournie est sensiblement éliminée.

3. Agencement selon la revendication 2, **caractérisé en ce que** l'unité de commande (12) est conçue pour commander ledit moyen (15, 32) d'application du frein de façon telle que l'action de freinage fournie est corrigée sur la base de la connaissance de valeurs mémorisées concernant des différences préalablement mesurées entre une action de freinage fournie et une action de freinage désirée.

4. Agencement selon l'une quelconque des revendications précédentes, **caractérisé en ce qu'**un capteur de pression (17) est situé dans un espace (24, 25) adjacent à une entrée ou sortie du milieu vers un espace toroïdal (21) qui est défini par un rotor (22) et un stator (23) du frein hydrodynamique (11).

5. Agencement selon l'une quelconque des revendications précédentes, **caractérisé en ce que** ledit moyen d'application du frein comporte une vanne proportionnelle (15) conçue pour déplacer un piston de régulation (20) afin de commander le débit dudit milieu en direction du ou en provenance du frein hydrodynamique (11).

6. Agencement selon l'une quelconque des revendications précédentes, **caractérisé en ce que** l'agencement comprend un dispositif indicateur (18) conçu pour être activé lorsque la différence estimée entre l'action de freinage fournie et l'action de freinage désirée dépasse une valeur spécifique.
